# EUROPÄISCHE PATENTSCHRIFT

(11) **EP 3 088 141 B1**
(45) Veröffentlichungstag und Bekanntmachung des Hinweises auf die Patenterteilung: **25.08.2021**
(21) Anmeldenummer: 16163881.2
(22) Anmeldetag: 05.04.2016
(51) Int. Cl.: B25J 9/16, B25J 11/00, B25J 13/08, B25J 15/00

(54) **MANIPULATORSYSTEM ZUM BEREITSTELLEN VON EINGESCHENKTEN GETRÄNKEN AN EINEN NUTZER**
MANIPULATOR SYSTEM FOR PROVIDING POURED BEVERAGES TO A USER
SYSTEME MANIPULATEUR DESTINE A PREPARER DES BOISSONS SERVIES A UN UTILISATEUR

(30) Priorität: 08.04.2015 DE 202015002531 U
(43) Veröffentlichungstag der Anmeldung: 02.11.2016
(73) Patentinhaber: KUKA Systems GmbH, 86165 Augsburg (DE)
(72) Erfinder: BURKHARD, Maximilian, 86931 Prittriching (DE); HONSBERG, Otmar, 82256 Fürstenfeldbruck (DE); PROSKE, Jürgen, 86356 Neusäß (DE); SCHMIDBERGER, Thomas, 86554 Pöttmes (DE)
(74) Vertreter: Mader, Joachim

(56) Entgegenhaltungen:
- US-A1- 2006 043 111
- Daniel Löffler: "Hefeweizen Einschenkroboter, beer pouring robot", youtube, 31. August 2012 (2012-08-31), Seite 1 pp., XP054976758, Gefunden im Internet: URL:https://www.youtube.com/watch?v=MltbAK FXRtk [gefunden am 2016-09-01]
- WESLEY P CHAN ET AL: "Grip forces and load forces in handovers: Implications for designing human-robot handover controllers", HUMAN-ROBOT INTERACTION (HRI), 2012 7TH ACM/IEEE INTERNATIONAL CONFERENCE ON, IEEE, 5. März 2012 (2012-03-05), Seiten 9-16, XP032212082, ISBN: 978-1-4503-1063-5
- kingdraki: "Kuka Roboter schenkt ein Weizen (Weissbier) ein", , 6. Juni 2007 (2007-06-06), Seite 1 pp., XP054976755, Gefunden im Internet: URL:https://www.youtube.com/watch?v=o8VqCq pfWrk [gefunden am 2016-09-01]
- None

## Beschreibung

### Gebiet der Erfindung

Die Erfindung betrifft ein Manipulatorsystem zum Bereitstellen von eingeschenkten Getränken an einen Nutzer und insbesondere an einen Gast sowie einen Greifer, der das Einschenken eines Getränks aus einer Flasche in ein Serviergefäß vereinfacht. Derartige Manipulatorsysteme können beispielsweise in der Gastronomie und insbesondere in der Eventgastronomie eingesetzt werden.

### Hintergrund

Aus dem Bereich der Eventgastronomie und insbesondere aus dem Bereich der Messeaufbauten sind Manipulatorsysteme bekannt, welche einem Nutzer/Gast Getränke servieren und/oder einschenken. Dabei kommen in diesen Manipulatorsystemen auch Industrieroboter als Manipulatoren zum Einsatz. Industrieroboter sind automatisch geführte, mit drei oder mehr frei programmierbaren Bewegungsachsen ausgerüstete Mehrzweckmanipulatoren, die entweder ortsfest oder mobil eingesetzt werden. Sie führen Greifer oder Werkzeuge (Endeffektoren) oder Werkstücke. Die Manipulatoren werden hierbei typischerweise positionsgeregelt betrieben, so dass der Manipulator eine vordefinierte Bewegungsbahn abfährt. Derartige Manipulatoren stellen durch ihre Bewegung und Kraft eine potentielle Gefährdung für in der Umgebung befindliche Personen und Objekte dar.

Um in diesen bekannten Manipulatorsystemen eine Gefährdung der Umgebung und insbesondere der Gäste auszuschließen, sind derartige Manipulatorsysteme typischerweise mit mechanischen Sicherheitsvorrichtungen, wie beispielsweise Sicherheitsbarrieren oder Schutzzäunen ausgestattet. Folglich ist das Manipulatorsystem vom Nutzer/Gast räumlich getrennt, wodurch das Servieren und Übergeben eines Getränks von dem Manipulator direkt an den Nutzer/Gast nicht möglich ist. Üblicherweise wird das Getränk vom Manipulator in einer Übergabezone abgestellt und der Nutzer/Gast kann anschließend das Getränk aus der Übergabezone entnehmen. Die Übergabezone ist dabei gewöhnlich durch Sicherheitstüren gesichert, so dass der Nutzer/Gast auch während des Greifens des Getränkes vor dem Manipulator geschützt ist.

Mechanische Sicherheitsvorrichtungen, wie beispielsweise Sicherheitsbarrieren oder Schutzzäunen sind jedoch insbesondere im Bereich der Gastronomie unerwünscht, da das Manipulatorsystem nur schlecht in bestehende gastronomische Aufbauten, wie beispielsweise Bars oder Tresen integriert werden kann. Auch eine Übergabe des Getränks, welche in einer geschützten Übergabezone stattfinden muss, um die Sicherheit des Nutzers/Gastes zu garantieren ist unerwünscht, da der Nutzer/Gast das Getränk letztlich wie aus einem Getränkeautomaten aus dem Manipulatorsystem selbst entnehmen muss und es nicht serviert bekommt.

Des Weiteren weisen die bekannten Industrieroboter, die zum Einschenken verwendet werden, und deren Steuerungen keine Fehlerlogik oder Prozessüberwachung auf, die Schwierigkeiten und/oder Fehler im System erkennen und überwinden bzw. anzeigen können.

Aus dem YouTube-Video von Daniel Löffler "Hefeweizen Einschenkroboter, beer pouring robot", hochgeladen am 31. August 2012, sind Manipulatorsysteme zum Servieren von Getränken bekannt, die einen Industrieroboter und einen Schutzzaun umfassen. Wesley P. Chan et al. "Grip forces and load forces in handovers: Implications for desiging human-robot handover controllers" offenbart eine Studie, die die Kräfte beim Übergeben von Objekten von Mensch zu Mensch untersucht. Aufgabe der vorliegenden Erfindung ist es, ein Manipulatorsystem bereitzustellen, welches die genannten Nachteile ausräumt.

### Ausführliche Beschreibung der Erfindung

Diese Aufgabe wird gelöst durch ein Manipulatorsystem nach Anspruch 1. Insbesondere wird die Aufgabe durch ein Manipulatorsystem zum Bereitstellen von eingeschenkten Getränken an einen Nutzer und insbesondere an einen Gast gelöst, umfassend:
eine Flaschenbereitstellungsvorrichtung, wobei die Flaschenbereitstellungsvorrichtung zumindest eine definierte erste Position umfasst, wobei auf der ersten Position eine Flasche angeordnet werden kann, und wobei die Flasche mit einem einzuschenkenden Getränk befüllt ist;
eine Serviergefäßbereitstellungsvorrichtung, wobei die Serviergefäßbereitstellungsvorrichtung zumindest eine definierte zweite Position umfasst, und wobei auf der zweite Position ein Serviergefäß angeordnet werden kann;
zumindest eine Serviergefäßaufnahmevorrichtung, wobei die Serviergefäßaufnahmevorrichtung dazu eingerichtet ist, das Serviergefäß in einer dritten Position aufzunehmen; und
zumindest einen kraftgeregelten Manipulator, wobei der kraftgeregelte Manipulator einen Greifer umfasst, und wobei der kraftgeregelte Manipulator dazu eingerichtet ist:
   ein Serviergefäß mittels des Greifers zu greifen, und von der zweiten Position in die dritte Position zu bewegen;
   eine Flasche mittels des Greifers in einer ersten Position der Flaschenbereitstellungsvorrichtung zu greifen und die gegriffene Flasche so zu positionieren und zu orientieren, dass zumindest ein Teil des einzuschenkenden Getränks in das, von der Serviergefäßaufnahmevorrichtung aufgenommene Serviergefäß fließt; und wobei der kraftgeregelte Manipulator weiterhin zumindest einen Sensor umfasst, welcher dazu eingerichtet ist, Kräfte in vertikaler Richtung zu ermitteln,
   und wobei der kraftgeregelte Manipulator weiter dazu eingerichtet ist, das mit dem einzuschenkenden Getränk befüllte Serviergefäß mittels des Greifers zu greifen und einem Nutzer, insbesondere einem Gast zu übergeben, wenn der Manipulator eine vertikale Kraft auf das befüllte Serviergefäß ermittelt, die eine definierte, der Gewichtskraft entgegengerichtete Mindestkraft überschreitet.

Somit kann der Manipulator dem Nutzer/Gast das befüllte Serviergefäß übergeben, also den Greifer öffnen, wenn dieser es sicher greift und eine ausreichend hohe vertikale Kraft auf das Serviergefäß aufbringt. Dies ist gewöhnlich der Fall, wenn der Nutzer/Gast das Glas mit dem Getränk ausreichend sicher in der Hand hält.

Vorzugsweise ist die Mindestkraft gleich der Gewichtskraft des befüllten Serviergefäßes, oder bevorzugt zumindest 90% der Gewichtskraft des befüllten Serviergefäßes und der Manipulator kann diese vertikale Kraft messen. Somit wird der Greifer geöffnet, wenn die ermittelte Gewichtskraft am Greifer bevorzugt "Null" ist, also keine zusätzliche Kraft (als die (Gewichts-)Kräfte des Manipulators in Verbindung mit dem Greifer) auf den Greifer/Manipulator wirkt.

Bevorzugt kann es sich bei der definierten ersten Position der Flaschenbereitstellungsvorrichtung um eine vorab definierte Position handeln. Ebenfalls kann es sich bei der ersten definierten Position um eine definierte Position handeln, die beim Einmessen des Manipulatorsystems bzw. des Manipulators bestimmt wird.

Das Manipulatorsystem wird vorzugsweise auf einer Bar, einem Tresen oder einem Serviertisch bereitgestellt und weist keine mechanischen Schutzvorrichtungen auf, so dass der Manipulator des Manipulatorsystems direkt mit einem Nutzer/Gast interagieren kann.

Die Flaschenbereitstellungsvorrichtung kann beispielsweise ein Getränkekasten sein, welcher zumindest sechs, vorzugsweise zumindest 12, weiter bevorzugt zumindest 20 und am bevorzugtes zumindest 24 Flaschen bereitstellen kann. Ebenso kann die Flaschenbereitstellungsvorrichtung ein Flaschen-Array sein, auf welchem die Flaschen auf definierten Positionen angeordnet sind. Ein solches Flaschen-Array kann beispielsweise ein Tablett sein. Alternativ kann die Flaschenbereitstellungsvorrichtung ein Magazin umfassen, in dem die Flaschen gelagert sind. Zur Bereitstellung der Flaschen in einer ersten Position werden diese beispielsweise aus dem Magazin in die erste Position befördert.

Die Serviergefäßbereitstellungsvorrichtung kann beispielsweise ein Serviergefäß-Array sein, auf welchem die Serviergefäße auf definierten Positionen angeordnet sind, wie beispielsweise auf einem Tablett. Die Serviergefäßbereitstellungsvorrichtung kann entsprechende Markierungen, wie beispielsweise Vertiefungen umfassen, welche die Ausrichtung der Serviergefäße auf der Serviergefäßbereitstellungsvorrichtung erleichtern. Alternativ kann die Serviergefäßbereitstellungsvorrichtung ein Magazin umfassen, in dem Serviergefäße gelagert sind. Zur Bereitstellung der Serviergefäße in einer zweiten Position werden diese beispielsweise aus dem Magazin in die zweite Position befördert. Ebenso könnten die Serviergefäße auch in undefinierten Positionen auf der Serviergefäßbereitstellungsvorrichtung angeordnet sein. In diesem Fall kann der Manipulator die tatsächliche Position der Serviergefäße mittels seiner Sensorik bzw. seiner Sensitivität selbststätig bestimmen.

Die Serviergefäßaufnahmevorrichtung dient zur definierten Aufnahme des Serviergefäßes während des Einschenkens des Getränks aus der Flasche in das Serviergefäß. Dabei kann das Serviergefäß in der dritten Position eigenständig stehen oder anderweitig orientiert sein. Um eine entsprechende Aufnahme des Serviergefäßes zu ermöglichen, weist die Serviergefäßaufnahmevorrichtung Mittel auf, wie beispielsweise Vorsprünge oder Vertiefungen, um eine sichere Aufnahme des Serviergefäßes zu gewährleisten.

Der kraftgeregelten Manipulator ist einerseits dazu eingerichtet ein Serviergefäß von der zweiten Position der Serviergefäßbereitstellungsvorrichtung in die dritte Position der Serviergefäßaufnahmevorrichtung zu bewegen. Andererseits ist der kraftgeregelte Manipulator dazu eingerichtet, eine Flasche von der ersten Position der Flaschenbereitstellungsvorrichtung zugreifen und anschließend so zu orientieren und zu positionieren, dass das Getränk, mit welchem die Flasche befüllt ist, zumindest teilweise in das Serviergefäß fließt, d.h. der Manipulator schenkt das Getränk in das Serviergefäß ein. Vorzugsweise richtet der Manipulator während des Einschenkens das Serviergefäß auf, so dass das Serviergefäß nach dem Einschenken selbstständig auf einer horizontalen Fläche steht. Typischerweise ist das Serviergefäß ein Trinkglas, wie beispielsweise ein Bierglas und insbesondere ein Weißbierglas. Jedoch können auch andere Serviergefäße verwendet werden. Soll beispielsweise Wein ausgeschenkt werden, so ist die Verwendung von Weingläsern möglich.

Der kraftgeregelte Manipulator ermöglicht die Implementierung zahlreicher Sicherheitsfunktionen, welche die Verwendung des Manipulators Systems ohne mechanischen Schutzvorrichtungen ermöglicht. Beispielsweise stoppt der Manipulator seine Bewegung, wenn er eine Kraft größer 30 Newton und bevorzugt größer 15 Newton ermittelt. Somit kann eine Gefährdung eines Nutzers/Gastes durch Kollision mit dem Manipulator oder mit vom Manipulator bewegter Objekte vermieden werden. Vorzugsweise umfasst der kraftgeregelte Manipulator ebenfalls eine Geschwindigkeits-überwachung, welche sicherstellt, dass der Manipulator eine zulässige Maximalgeschwindigkeit nicht überschreitet. Vorzugsweise liegt die Maximalgeschwindigkeit bei 500 mm/s, bevorzugt bei 300 mm/s und am bevorzugten bei 200 mm/s.

Das Ermitteln von Kräften in vertikaler Richtung ermöglicht zudem eine direkte Übergabe des Getränkes vom Manipulator an den Nutzer/Gast. Greift der Nutzer/Gast das Serviergefäß und bringt dabei auf dieses Serviergefäß eine vertikale Kraft auf, welche der Schwerkraft entgegenwirkt. Übersteigt diese vom Nutzer/Gast aufgebrachte vertikale Kraft eine definierte Mindestkraft, ermittelt der Manipulator dies, öffnet den Greifer und übergibt das Serviergefäß dem Nutzer/Gast. Somit ist eine sichere Übergabe des Serviergefäßes möglich, ohne dass dieses in eine bestimmte sichere Übergabezone abgestellt werden muss. Da das Manipulatorsystem das Serviergefäß direkt an einen Nutzer/Gast übergeben kann, und ohne mechanische Sicherheitsvorrichtungen, wie Barrieren, betrieben werden kann, ist es möglich, das Manipulatorsystem direkt in bestehende gastronomische Strukturen zu integrieren.

Vorzugsweise weist der Manipulator mehrere Bewegungsachsen auf, wobei jeder Bewegungsachse ein Sensor zugeordnet ist, wobei der Sensor Kräfte und/oder Momente bestimmt, welche auf die Bewegungsachse wirken, der der Sensor zugeordnet ist. Die Bereitstellung mehrerer Bewegungsachsen und vorzugsweise von zumindest sechs Bewegungsachsen ist vorteilhaft, da der Manipulator die gegriffenen Objekte in allen sechs Freiheitsgraden bewegen kann. Die Überwachung der auf die Bewegungsachsen wirkenden Kräfte und oder Momente ist vorteilhaft, da so unterschieden werden kann, wo Kräfte und oder Momente an der Manipulatorstruktur angreifen. Dies ermöglicht zum einen die Implementierung von Sicherheitsfunktionen, zum anderen aber auch eine einfache Steuerung des Manipulators durch Berühren der Manipulatorstruktur. Vorzugsweise ist der kraftgeregelte Manipulator ein Leichtbauroboter, und besonders bevorzugt ein LBR iiwa der KUKA AG.

Unter Ermitteln der Kraft in vertikaler Richtung kann hier beispielsweise verstanden werden, dass durch wenigstens einen Sensor der Bewegungsachsen aufgrund von Berechnungen die Kraft in vertikaler Richtung bestimmt wird. Vorzugsweise werden mehrere bzw. alle Sensoren der Bewegungsachsen zur Ermittlung herangezogen und/oder von den Sensoren erfasste Werte berücksichtigt. Weiterhin könnte aber auch ein Sensor im Tool Center Point (TCP) oder dem Greifer angeordnet sein, welcher wenigstens einen Wert für die Kraft in vertikaler Richtung direkt oder indirekt erfasst bzw. ermittelt. Das Ermitteln der Kraft in vertikaler Richtung kann somit als direktes oder indirektes Erfassen oder Bestimmen verstanden werden. Ebenso wäre eine Kombination aus Werten, welche mittels eines Sensors im TCP/Greifer und/oder mittels eines Sensors der Bewegungsachsen des Manipulators ermittelt wurden zur Ermittlung der Kraft in vertikaler Richtung denkbar. Mögliche Sensoren, welche im TCP und/oder Greifer angeordnet werden können sind 6D Sensoren, Kraftmessdosen, Dehnungsmessstreifen und ähnliche Sensoren.

Vorzugsweise ist der Manipulator dazu eingerichtet, die Gewichtskraft der vom Greifer gegriffenen Objekte zu bestimmen. Die Gewichtskraft der vom Greifer gegriffenen Objekte kann beispielsweise über die Kraft/Momenten-Sensoren der Bewegungsachsen bestimmt werden. Ist die Gewichtskraft des vom Greifer gegriffenen Objekts bekannt, so ist es möglich, die gegriffenen Objekte anhand der bestimmten Gewichtskraft zu unterscheiden. Beispielsweise kann hierbei unterschieden werden, ob das gegriffene Objekt eine Flasche oder ein Serviergefäß ist, und ob dieses voll oder leer ist. Vorzugsweise kann so auch der aktuelle Füllstand von Flasche oder Serviergefäß bestimmt werden. Ebenso kann das Manipulatorsystem durch die Bestimmung der Gewichtskraft feststellen, ob eine Flasche oder ein Serviergefäß beschädigt ist.

Vorzugsweise sind weitere Verfahrensschritte von der Gewichtskraft des gegriffenen Objektes abhängig. Beispielsweise kann eine falsch positionierte leere Flasche, welche von der Flaschenbereitstellungsvorrichtung gegriffen wurde, beiseite gestellt werden. Anschließend kann eine neue volle Flasche gegriffen werden. Ebenso können beschädigte Flaschen und/oder Serviergefäße erkannt und ausgesondert werden.

Die Serviergefäßaufnahmevorrichtung ist dazu eingerichtet, das Serviergefäß in einer dritten Position in einer nicht-vertikalen Orientierung aufzunehmen, wobei die Längsachse des Serviergefäßes in der nicht-vertikalen Orientierung mit einer Grundplatte vorzugsweise einen Winkel von zumindest 20°, bevorzugt von zumindest 30° und am bevorzugtesten von zumindest 45° einschließt.

Insbesondere beim Einschenken von schäumenden Getränken wie beispielsweise kohlesäurehaltigen Getränken, wie Limonaden oder Bieren, wird durch die nicht-vertikale Orientierung die Schaumbildung signifikant reduziert, wodurch ein Überschäumen des Getränks vermieden werden kann. Ebenso können höhere Fließgeschwindigkeiten beim Einschenken erzielt werden. Dies ist insbesondere im gastronomischen Bereich vorteilhaft.

Die Serviergefäßaufnahmevorrichtung umfasst eine Aussparung und zumindest einen Vorsprung, wobei die Aussparung dazu eingerichtet ist, eine untere Kante des Serviergefäßes aufzunehmen, und wobei der zumindest eine Vorsprung dazu eingerichtet ist, an einer Seitenfläche des Serviergefäßes anzuliegen. Durch die Ausgestaltung von Vorsprung und Aussparung kann die Orientierung des Serviergefäßes in der dritten Position angepasst werden. Zudem wird das Serviergefäß sicher von der Serviergefäßaufnahmevorrichtung aufgenommen und ein Wegrutschen des Serviergefäßes während des Einschenkens wird vermieden. Weiterhin kann durch die Ausgestaltung von Vorsprung und Aussparung die Serviergefäßaufnahmevorrichtung an die zu verwendenden Serviergefäße angepasst werden.

Vorzugsweise umfasst die Flaschenbereitstellungsvorrichtung zumindest zwei definierte erste Positionen, auf welchen jeweils eine Flasche angeordnet werden kann, wobei der Manipulator dazu eingerichtet ist, eine erste Position positionsgeregelt anzufahren, und eine Flasche, welche auf der angefahrenen ersten Position angeordnet ist, mittels des Greifers kraftgeregelt zu greifen. Das positionsgeregelte Anfahren einer Position ermöglicht ein schnelles Anfahren. Jedoch ist für eine genaue Positionsregelung eine Referenzierung des Manipulatorsystems notwendig. Auch kann ein rein positionsgeregeltes Anfahren etwaige Ungenauigkeiten bei der Positionierung der Flaschen nicht ausgleichen. Deshalb ist es vorteilhaft, die genaue Positionierung kraftgeregelt durchzuführen und so die Vorteile der Positionsregelung mit denen der Kraftregelung zu kombinieren. Ist die grobe Position mittels Positionsregelung angefahren, so wird in die Kraftregelung umgeschaltet. Dabei werden die von einem Kontakt zwischen Manipulator (bzw. vom Manipulator gegriffenen Gegenstände) und in der Umgebung befindlichen Objekte resultierenden Kräfte und/oder Momente ermittelt/erfasst und zur Regelung des Manipulators verwendet. So kann sich der Manipulator beispielsweise beim Greifen einer Flasche entsprechend der tatsächlichen Position der Flasche ausrichten, welche von der theoretischen Position abweichen kann.

Vorzugsweise umfasst die Flaschenbereitstellungsvorrichtung zumindest zwei unterschiedliche Positionsfelder, wobei die zumindest zwei unterschiedlichen Positionsfelder jeweils definierte erste Positionen aufweisen, und wobei auf den zumindest zwei unterschiedlichen Positionsfeldern Flaschen, welche mit unterschiedlichen einzuschenkenden Getränken befüllt sind, angeordnet werden können, wobei der Manipulator dazu eingerichtet ist, abhängig von einer Eingabe eines Nutzers/Gastes eine Flasche von einem ausgewählten Positionsfeld mittels des Greifers zu greifen. Werden unterschiedliche Positionsfelder bereitgestellt, so ist es möglich dem Nutzer/Gast unterschiedliche Getränke zu servieren. Beispielsweise kann auf einem ersten Positionsfeld ein Weißbier und auf einem zweiten Positionsfeld ein anderes Weißbier bereitgestellt werden. Andere Getränke und Getränkekombinationen sind ebenfalls möglich.

Vorzugsweise ist die Flaschenbereitstellungsvorrichtung so angeordnet, dass die Flaschen zumindest teilweise in der Grundplatte versenkt sind. Die teilweise Versenkung ermöglicht ein sicheres Aufstellen der Flaschen, und verringert das Risiko die Flaschen beim kraftgeregeleten Positionieren und Greifen umzuwerfen. Ebenso wird hierdurch bevorzugt das Positionieren der Flaschen durch einen Nutzer reproduzierbar, so dass der Nutzer die Flaschen immer an den gleichen, richtigen Stellen aufstellt. Vorzugsweise umfasst die Flaschenbereitstellungsvorrichtung eine Kühlvorrichtung, die die Flaschen kühlt. Somit können kalte Getränke auch dann angeboten werden, wenn die Umgebungstemperatur des Manipulatorsystems über der bevorzugten Trinktemperatur des Getränkes liegt.

Vorzugsweise ist der Manipulator dazu eingerichtet, über Berührungen an zumindest einer der Bewegungsachsen des Manipulators gesteuert zu werden. Die Steuerung über bevorzugt menschliche Berührungen an zumindest einer der Bewegungsachsen des Manipulators ermöglicht eine intuitive Steuerung des Manipulatorsystems, ohne weitere Eingabegeräte bereitstellen zu müssen. Durch unterschiedliche Berührungen ist auch eine unterschiedliche Getränkeauswahl möglich.

Vorzugsweise umfasst die Serviergefäßbereitstellungsvorrichtung zumindest zwei definierte zweite Positionen, auf welchen jeweils ein Serviergefäß angeordnet werden kann, wobei der Manipulator dazu eingerichtet ist, eine zweite Position positionsgeregelt anzufahren, und ein Serviergefäß, welches auf der angefahrenen zweiten Position angeordnet ist, mittels des Greifers kraftgeregelt zu greifen. Das positionsgeregelte Anfahren einer Position ermöglicht ein schnelles Anfahren. Jedoch ist für eine genaue Positionsregelung eine exakte Referenzierung des Manipulatorsystems notwendig. Auch kann ein rein positionsgeregeltes Anfahren etwaige Ungenauigkeiten bei der Positionierung der Serviergefäße nicht ausgleichen. Deshalb ist es vorteilhaft, die genaue Positionierung kraftgeregelt durchzuführen und so die Vorteile der Positionsregelung mit denen der Kraftregelung zu kombinieren. Ist die grobe Position mittels Positionsregelung angefahren, so wird in die Kraftregelung umgeschaltet. Dabei werden die von einem Kontakt zwischen Manipulator (bzw. vom Manipulator gegriffenen Gegenstände) und in der Umgebung befindlichen Objekte resultierenden Kräfte und/oder Momente erfasst/ermittelt und zur Regelung des Manipulators verwendet. So kann sich der Manipulator beispielsweise beim Greifen eines Serviergefäßes entsprechend der tatsächlichen Position des Serviergefäßes ausrichten, welche von der theoretischen Position abweichen kann. Somit ist ein sicheres Greifen möglich.

Vorzugsweise umfasst das Manipulatorsystem zumindest eine Flaschenablagevorrichtung, wobei die Flaschenablagevorrichtung zumindest zwei definierte vierte Positionen umfasst, auf welchen jeweils eine leere Flasche angeordnet werden kann, wobei der Manipulator dazu eingerichtet ist, eine vierte Position positionsgeregelt anzufahren, und eine leere Flasche, kraftgeregelt auf der angefahrenen vierten Position anzuordnen. Das Bereitstellen einer Flaschenablagevorrichtung ist vorteilhaft, da so leere Flaschen gesammelt und anschließend aus dem Manipulatorsystem entfernt werden können. Wird vom Manipulator eine Kraft ermittelt/erfasst, welche auf einem Kontakt zwischen der gegriffenen, leeren Flasche und der Flaschenablagevorrichtung beruht (z.B. eine vertikale Kraft in der angefahrenen vierten Position) so kann der Greifer geöffnet werden und die Flasche in der Flaschenablagevorrichtung abgelegt werden. Ebenso ist es möglich, dass die vierte Position derart definiert ist, dass eine gegriffene Flasche (gerade noch) keinen Kontakt mit der Flaschenablagevorrichtung hat, so dass der Greifer geöffnet wird/werden kann, wenn keine Kraft ermittelt/erfasst wird. Durch das Vorliegen von keinen Kräften kann festgestellt werden, dass keine Objekte/keine Flasche in/an der angefahrenen vierten Position befindlich ist. Hierbei muss die vierte Position entsprechend gewählt werden, dass die Flasche beim Öffnen des Greifers nicht zu weit "fällt" und/oder beschädigt wird bzw. umfällt. Vorzugsweise ist die vierte Position in diesem Fall derart gewählt, dass sich die Flasche mit dem Flaschenboden in vertikaler Richtung höchstens 5 cm, bevorzugt höchstens 2 cm und am bevorzugten höchstens 1 cm über der Flaschenablagevorrichtung befindet. Überdies ermöglicht das kraftgeregelte Anfahren einer vierten Position, zu bestimmen, ob auf der angefahrenen vierten Position bereits eine leere Flasche vorhanden ist oder nicht. Wird nämlich eine entsprechende vertikale Kraft bereits vor Erreichen der vierten Position ermittelt/erfasst, so deutet dies darauf hin, dass an der vierten Position bereits eine Flasche abgestellt worden ist. Tritt dies auf, so kann der Manipulator die leere Flasche an einer anderen vierten Position abstellen.

Vorzugsweise umfasst das Manipulatorsystem zumindest einen Flaschenöffner, wobei der Flaschenöffner in einer fünften Position angeordnet ist, und wobei der Manipulator dazu eingerichtet ist, eine gegriffene Flasche mittels des Flaschenöffners zu öffnen. Vorzugsweise ist der Flaschenöffner ein Flaschenöffner zum Öffnen von Flaschen, welche mit einem Kronkorken verschlossen sind. Jedoch kann der Flaschenöffner auch dazu eingerichtet sein verkorkte Flaschen, wie beispielsweise Weinflaschen, Flaschen mit einem Bügelverschluss oder verschraubte Flaschen zu öffnen. Zum Öffnen der Flasche wird die Flasche vom Manipulator in die fünfte Position bewegt und dort mittels des Flaschenöffners geöffnete. Die Bewegung, welche zum Öffnen der Flasche notwendig ist, wird vorzugsweise vom Manipulator ausgeführt. Alternativ kann der Flaschenöffner auch bewegbar sein und die notwendige Bewegung zum Öffnen der Flasche durchführen.

Vorzugsweise umfasst das Manipulatorsystem eine Spülvorrichtung, wobei die Spülvorrichtung in einer sechsten Position angeordnet ist, und dazu eingerichtet ist, ein Serviergefäß zu spülen, und wobei der Manipulator dazu eingerichtet ist, ein Serviergefäß mittels des Greifers zu greifen, und so über der Spülvorrichtung zu positionierten und zu orientieren, dass das Serviergefäß gespült wird. Typischerweise ist die Spülvorrichtung eine gastronomische Spülvorrichtung, welche ein Serviergefäß spült, wenn dieses auf die Spülvorrichtung gedrückt wird oder über der Spülvorrichtung positioniert wird. Überdies kann die Spülvorrichtung eine vertikal orientierte Bürste umfassen, welche in einem mit Spülwasser gefülltem Becken angeordnet ist.

Vorzugsweise sind die Spülvorrichtung und die Serviergefäßaufnahmevorrichtung, in einer Wanne angeordnet, wobei die Wanne dazu eingerichtet ist Spülwasser und/oder verschüttete Teile des einzuschenkenden Getränks aufzunehmen. Die Wanne ermöglicht ein sauberes Einschenken des Getränkes und schützt weitere Systembestandteile vor verschütteten Getränken und Spülwasser.

Vorzugsweise umfasst das Manipulatorsystem weiterhin eine Klingel, wobei der Manipulator dazu eingerichtet ist, die Klingel zu betätigen, wenn ein Fehler beim Betrieb des Manipulatorsystems aufgetreten ist. Vorzugsweise ist die Klingel eine mechanische Klingel, die durch Drücken betätigt wird. Typische auftretende Fehler beim Betrieb des Manipulators Systems sind unter anderen, das Fehlen von Serviergefäßen, das Fehlen von Flaschen, sowie eine vollständig gefüllte Flaschenablagevorrichtung.

Vorzugsweise ist der Manipulator dazu eingerichtet, eine Position mit einer unbekannten Abweichung positionsgeregelt anzufahren und sich mittels Kraftregelung, durch Berührung der, den Positionen zugeordneten Strukturen, genau auszurichten, wobei die Berührung der, den Positionen zugeordneten Strukturen mit dem Manipulator, mit dem Greifer oder mit einem gegriffenen Objekt erfolgen kann. Die Kombination von Positionsregelung und Kraftregelung ermöglicht einerseits ein schnelles Anfahren der Positionen und andererseits ein präzises Ausrichten des Manipulators gemäß der entsprechenden Positionen. Zudem ist eine aufwändige Referenzierung nicht notwendig, da die genauen anzufahrenden Positionen mittels Kraftregelung ermittelt werden.

Vorzugsweise ist der Greifer des Manipulatorsystems ein Greifer, wie er nachstehend beschrieben wird.

Der Greifer zum Einschenken eines Getränks umfasst zwei Greifelemente zum Greifen einer Flasche, wobei zumindest ein Greifelement zum Greifen auf das jeweils andere Greifelement zu bewegt werden kann, und wobei jedes Greifelement jeweils ein erstes und ein zweites Kontaktelement umfasst, wobei die Kontaktelemente senkrecht zur Greifbewegung schwenkbar an dem ersten oder zweiten Greifelement gelagert sind, so dass sich die Kontaktelemente beim Greifen an einer Kontur eines gegriffenen Objekts ausrichten können. Beispielsweise können die Kontaktelemente an einer Achse, welche an dem jeweiligen Greifelement angebracht ist, schwenkbar gelagert sein. Die schwenkbare Lagerung kann durch Anschläge begrenzt sein, so dass sich die Kontaktelemente beispielsweise um ±15°, vorzugsweise um ±10° und am bevorzugtesten um ±5° um eine mittige Orientierung verschwenken können. Dies ermöglicht die Ausrichtung der Kontaktelemente an einer Kontur eines gegriffenen Objektes. Beispielsweise können sich die Kontaktelemente am Hals einer Flasche oder im Griffbereich eines Serviergefäßes ausrichten. Ebenso ermöglicht dieser Greifer es, unterschiedliche Objekte zu greifen, da sich die Kontaktelemente entsprechend der Kontur des gegriffenen Objektes ausrichten.

Das Kontaktelement umfasst ein Tastmittel zum Stützen eines Serviergefäßes, wobei das Tastmittel zumindest zwei Vorsprünge aufweist, und wobei die Vorsprünge derart dimensioniert sind, um an einer Seitenfläche des Serviergefäßes in der Nähe einer Öffnung des Serviergefäßes anzuliegen, so dass, wenn der Greifer eine Flasche greift, die Öffnung der Flasche in oder über der Öffnung des Serviergefäßes positioniert ist. Somit kann das Getränk aus der Flasche in das Serviergefäß fließen, ohne dabei verschüttet zu werden. Insbesondere ermöglicht eine geeignete Dimensionierung der Vorsprünge, das Eintauchen des Flaschenhalses in das eingeschenkte Getränk zu verhindern. Dies dient zur Verbesserung der Hygiene, da die äußere Oberfläche des Flaschenhalses nicht mit dem Getränk in Kontakt kommt.

Vorzugsweise weisen die die Kontaktelemente jeweils zwei zentrierende Kontaktflächen auf, wobei die Kontaktflächen einen Winkel kleiner 180° einschließen, und wobei die Kontaktflächen vorzugsweise mit einem duktilen Material versehen sind, wobei das duktile Material vorzugsweise eine Shore-A Härte von höchstens 70, bevorzugt von höchstens 50 und am bevorzugtesten von höchstens 30 aufweist. Zentrierende Kontaktflächen ermöglichen es insbesondere zylindrische Objekte, oder zylinderartige Objekte, wie beispielsweise Flaschen oder Serviergefäße sicher zu greifen. Ein duktiles Material verbessert überdies die Griffigkeit, und ermöglicht insbesondere auch feuchte Objekte sicher zugreifen. Insbesondere können das Serviergefäß oder die Flasche aufgrund von Kondensation oder Überschäumen des Getränks eine feuchte Oberfläche aufweisen. Weiterhin schützt das duktile Material die Flasche und das Serviergefäß vor möglichen Beschädigungen durch den Greifer.

### Ausführliche Beschreibung der Figuren

Im Folgenden wird die Erfindung anhand von beispielhaften Ausführungsformen, welche in den Figuren dargestellt sind näher erläutert. Dabei zeigt
- Fig. 1A: eine schematische Ansicht eines Manipulatorsystems;
- Fig. 1B: eine schematische Draufsicht des Manipulatorsystems aus Fig. 1A;
- Fig. 2: eine schematische Ansicht eines weiteren Manipulatorsystems;
- Fig. 3A, 3B: eine schematische Ansicht eines Greifers;
- Fig. 4: eine mittels des Greifers gegriffene Flasche;
- Fig. 5: ein mittels des Greifers gegriffenes Serviergefäß, wobei das Serviergefäß ein Weißbierglas ist,
- Fig. 6: einen kraftgeregelten Manipulator, welcher ein Getränk einschenkt; und
- Fig. 7: ein schematisches Ablaufdiagramm eines Ausschank-Verfahrens.

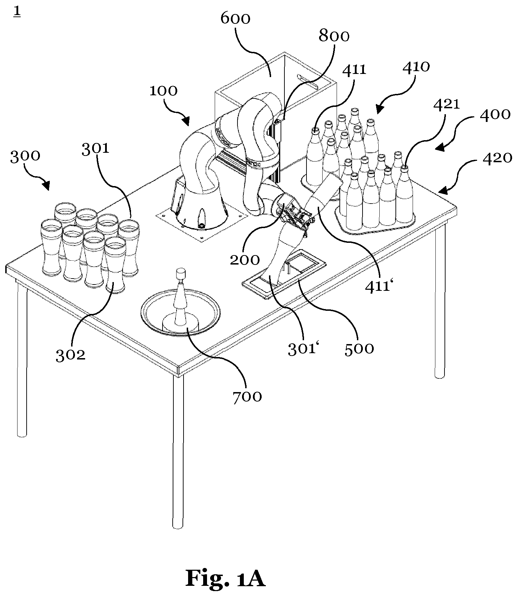

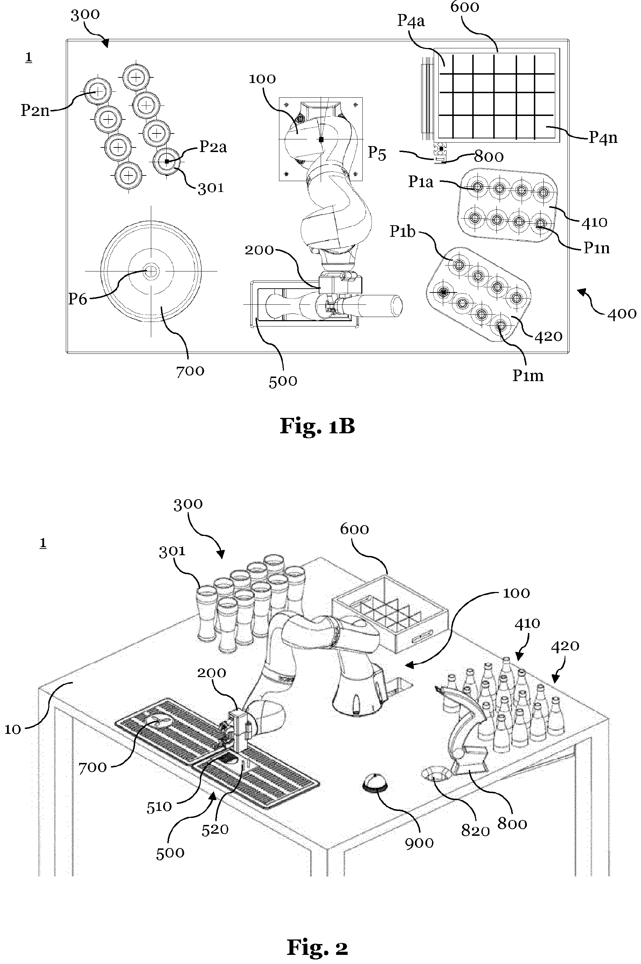

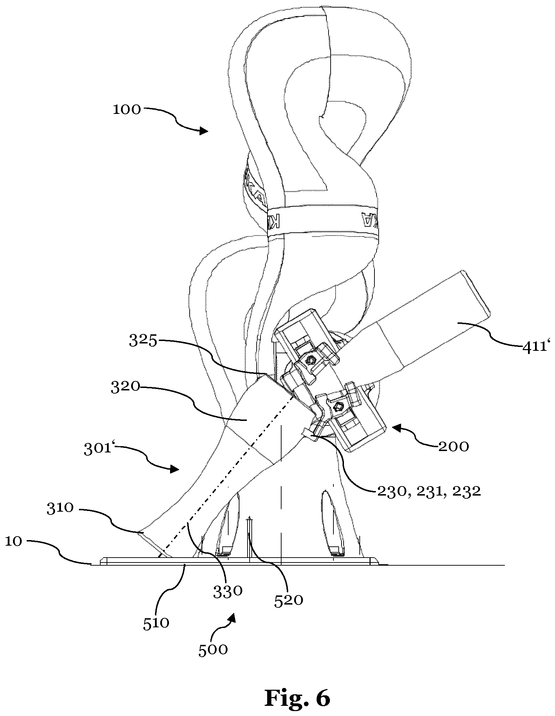

Insbesondere zeigt Figur 1A eine schematische Ansicht eines Manipulatorsystems 1 und Figur 1B eine schematische Draufsicht des Manipulatorsystems 1 aus Fig. 1A. Ein kraftgeregelter Manipulator 100 ist im Wesentlichen mittig im Manipulatorsystem 1 angeordnet. Am Manipulator 100 ist ein Greifer 200 eingerichtet, welche eine Flasche 411' greift und ein Getränk in das Serviergefäß 301', welches beispielsweise ein Weißbierglas ist, einschenkt. Das Serviergefäß 301' ist von einer Serviergefäßaufnahmevorrichtung 500 aufgenommen. Das Einschenken des Getränks erfolgt, indem der Manipulator 100 die gegriffene Flasche 411' derart positioniert und orientiert, dass sich die Öffnung der Flasche 411' über einer Öffnung 325 des Serviergefäßes 301' befindet. Anschließend wird die Flasche 411' so geneigt, dass das Getränk von der Flasche 411' in das Serviergefäß 301' fließt, wie in Fig. 6 dargestellt. Vorzugsweise wird das Serviergefäß 301' während des Einschenkens aufgerichtet.

Weiterhin umfasst das Manipulatorsystem 1, eine Serviergefäßbereitstellungsvorrichtung 300, wobei die Serviergefäßbereitstellungsvorrichtung 300 beispielsweise acht definierte zweite Positionen P2a ...P2n umfasst, auf denen jeweils ein Serviergefäß 301, 302 angeordnet ist. Weiterhin umfasst das Manipulatorsystem 1, eine Flaschenbereitstellungsvorrichtung 400, die zwei Positionsfelder 410, 420 aufweist. Die Positionsfelder 410, 420 weisen jeweils acht definierte erste Positionen P1a ...P2n und P1b ...P1m auf. Auf den ersten Positionen P1a ...P2n sind Flaschen eines ersten Getränkes 411 und auf den ersten Positionen P1b ...P1m sind Flaschen eines zweiten Getränkes 421 angeordnet. Weiterhin umfasst das Manipulatorsystem 1 eine Spülvorrichtung 700 in einer sechsten Position P6, wobei die Spülvorrichtung dazu eingerichtet ist, Serviergefäße 301, 302 zu spülen, wenn diese über der Spülvorrichtung 700 angeordnet sind.

Soll ein Getränk in ein Serviergefäß eingeschenkt werden, so wird zunächst ein Serviergefäß 301 von der Serviergefäßbereitstellungsvorrichtung 300 gegriffen, zu der Spülvorrichtung 700 bewegt, und anschließend in der Serviergefäßaufnahmevorrichtung 500 aufgenommen. Anschließend greift der Manipulator 100 eine Flasche 411, 421 von der Flaschenbereitstellungsvorrichtung 400, öffnet die Flasche mittels des Flaschenöffners 800, und positioniert und orientiert die geöffnete Flasche 411' derart, dass das das Getränk von der Flasche 411' in das Serviergefäß 301' fließen kann. Der Flaschenöffner 800 ist dabei in einer fünften Position P5 angeordnet. Weiterhin umfasst das Manipulatorsystem 1 eine Flaschenablagevorrichtung 600, welche beispielsweise 24 vierte Positionen P4a ... P4n umfasst. Die Flaschenablagevorrichtung 600 ist dazu eingerichtet leere Flaschen aufzunehmen.

Fig. 2 zeigt ein Manipulatorsystem 1, wobei der Manipulator 100, umfassend den Greifer 200, mittig angeordnet ist. Im gezeigten Beispiel umfasst die Serviergefäßbereitstellungsvorrichtung 300 zwölf Serviergefäße 301. Die Flaschenbereitstellungsvorrichtung 400, welche zwei Positionsfelder 410, 420 umfasst ist ebenso wie die Flaschenablagevorrichtung 600 zumindest teilweise in der Grundplatte 10 versenkt. Die Spülvorrichtung 700 sowie die Serviergefäßaufnahmevorrichtung 500, welche eine Aussparung 510 und einen Vorsprung 520 umfasst, sind in einer Wanne angeordnet. Somit kann verschüttete Flüssigkeit (Getränk oder Spülwasser) in der Wanne aufgefangen werden. Der Flaschenöffner 800 ist derart über einer Öffnung 820 angeordnet, dass Kronkorken beim Öffnen der Flaschen in die Öffnung 820 fallen und unterhalb der Grundplatte 10 gesammelt werden können. Weiterhin umfasst das Manipulatorsystem 1 eine Klingel 900, welche vom Manipulator 100 betätigt werden kann, wenn ein Fehler im Manipulatorsystem aufgetreten ist. Vorzugsweise wird die Klingel durch einen mechanischen Kontakt betätigt.

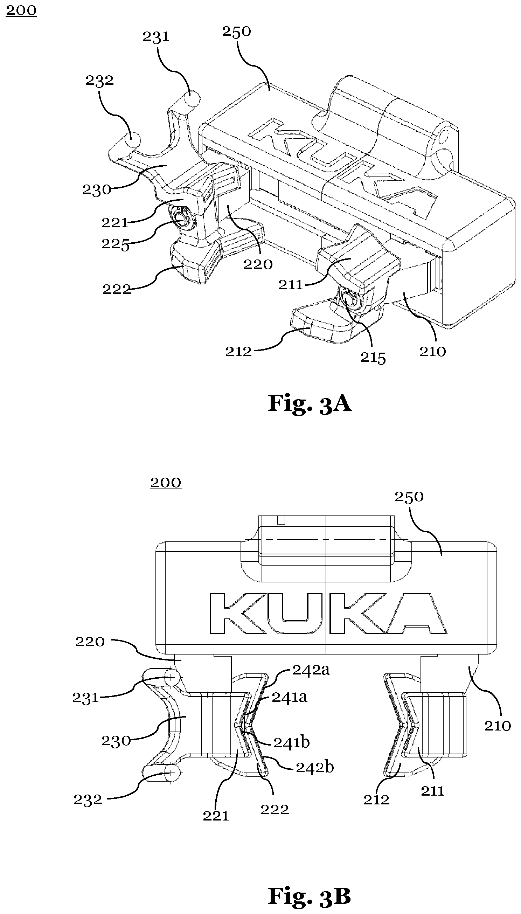

Die Figuren 3A und 3B zeigen schematische Ansichten eines Greifers 200. In einem Grundkörper 250 des Greifers 200 sind die Greifelemente 210, 220 beweglich gelagert. Während des Greifens werden die Greifelemente 210, 220 aufeinander zu bewegt. Dabei können beide Greifelemente 210, 220 beweglich ausgeführt sein oder nur eines der beiden Greifelemente 210 oder 220. Die Bewegung kann translatorisch oder rotatorisch sein. Vorzugsweise werden die Greifelemente pneumatisch betätigt, jedoch sind andere Betätigungsmechanismen, die beispielsweise durch elektrisch oder hydraulisch betriebene Aktoren betätigt werden, möglich. An den Achsen 215, 225, welche an den Greifelementen 210, 220 eingerichtet sind, sind erste 211, 221 und zweite Kontaktelemente 212, 222 schwenkbar gelagert, so dass sich die Kontaktelemente 211, 221, 212, 222 beim Greifen an einer Kontur eines gegriffenen Objektes ausrichten können. Die Kontaktelemente weisen weiterhin zentrierende Kontaktflächen 241a, 241b, 242a, 242b auf, welche einen Winkel kleiner 180° einschließen. Wie in Figur 3B gezeigt, beträgt der eingeschlossene Winkel in der vorliegenden Darstellung etwa 120°. Das erste Kontaktelement 221 umfasst weiterhin ein Tastmittel 230, welches zwei Vorsprünge 231, 232 aufweist.

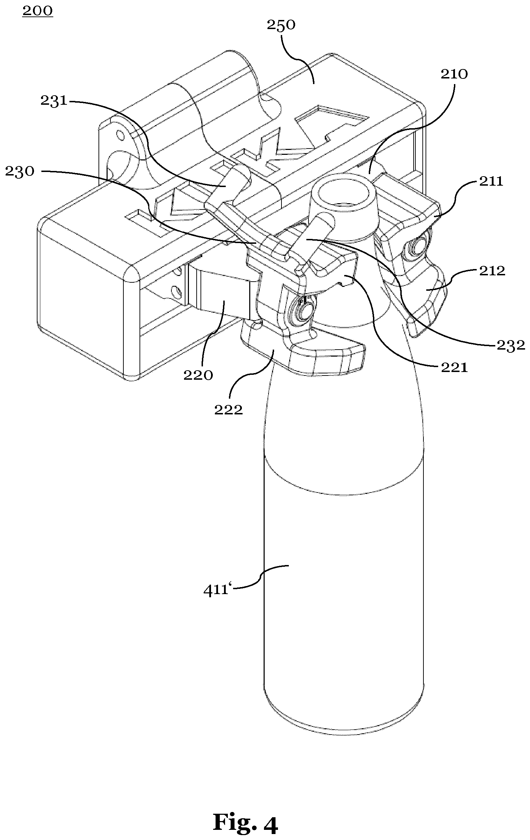

Figur 4 zeigt eine mittels des Greifers 200 gegriffene Flasche 411'. Zum Greifen werden die Greifelemente 210, 220 aufeinander zu bewegt, so dass sich die, den Greifelementen 210, 220 zugeordneten Kontaktelemente 211, 212, 221, 222, an der Kontur des Halses der Flasche 411' ausrichten und so einen sicheren Griff ermöglichen. Durch die zentrierenden Kontaktflächen wird die Flasche im Greifer 200 zentriert.

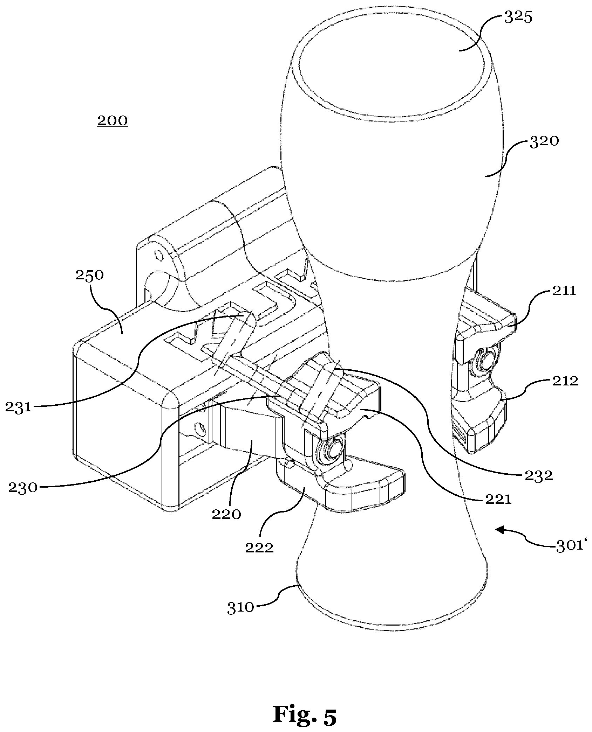

Figur 5 zeigt ein mittels des Greifers 200 gegriffenes Serviergefäß 301', wobei das Serviergefäß 301' ein Weißbierglas ist. Zum Greifen sind die Greifelemente 210, 220 aufeinander zu bewegt worden, so dass sich die den Greifelementen 210, 220 zugeordneten Kontaktelemente 211, 212, 221, 222 an der Kontur der Seitenfläche 320 des gegriffenen Weißbierglases 301' ausrichten und so einen sicheren Griff ermöglichen. Durch die zentrierenden Kontaktflächen, wird das Weißbierglas 301' im Greifer 200 zentriert. Das Weißbierglas weist zudem eine untere Kante 310 und einer Öffnung 325 auf.

Figur 6 zeigt einen kraftgeregelten Manipulator 100, welcher eine Flasche 411' derart über einem Serviergefäß 301', welches in einer Serviergefäßaufnahmevorrichtung 500 aufgenommen ist, positioniert und orientiert, dass ein Getränk von der Flasche 411' in das Serviergefäß 301' fließt und eingeschenkt wird. Während des Einschenkens ist das Serviergefäß 301' in der Serviergefäßaufnahmevorrichtung 500 aufgenommen, derart, dass eine untere Kante 310 des Serviergefäßes in einer Aussparung 510 der Serviergefäßaufnahmevorrichtung 500 angeordnet ist. Der Greifer 200 greift die Flasche 411' am Flaschenhals und stützt zugleich mit dem Tastmittel 230 und dessen Vorsprüngen 231 und 232 eine Seitenfläche 320 des Serviergefäßes 301'. Dabei wird die Öffnung der Flasche derart über der Öffnung 325 des Serviergefäßes 301' positioniert, dass das Getränk von der Flasche 411' in das Serviergefäß 301' fließt. Durch die Neigung der Flasche 411' kann die Fließgeschwindigkeit des Getränkes beeinflusst werden. Vorzugsweise richtet der Manipulator das Serviergefäß 301' mittels des Tastmittels 230 während des Einschenkens auf, so dass das Serviergefäß 301' vertikal steht. Das heißt der Winkel, den die Längsachse 330 des Serviergefäßes 301' mit der Grundplatte 10 einschließt, verändert sich während des Einschenkens, bis er vorzugsweise 90° beträgt.

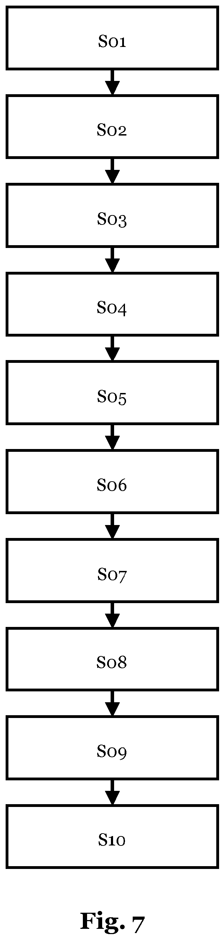

Figur 7 zeigt ein schematisches Ablaufdiagramm eines beispielhaften Ausschank-Verfahrens, welches mit dem Manipulatorsystem 1 ausgeführt werden kann. In einem ersten Verfahrensschritt S01 wartet der Manipulator in einer Initialpose auf einen Befehl, insbesondere eine Berührung, eines Nutzers/Gastes. Im anschließenden Schritt S02 wird ein Befehl eines Nutzers/Gastes erkannt, interpretiert und in einen Bedienauftrag umgesetzt. Im Schritt S03 greift der Manipulator 100 mittels des Greifers 200 ein Serviergefäß 301. Anschließend wird im Schritt S04 das gegriffene Serviergefäß 301' mittels der Spülvorrichtung 700 gespült, und bevorzugt nach dem Spülen über der Spülvorrichtung 700 geschwenkt/geschüttelt und anschließend in der Serviergefäßaufnahmevorrichtung angeordnet. Im Schritt S05 wird eine, dem Bedienauftrag entsprechende, volle Flasche 411 gegriffen und anschließend im Schritt S06 mittels des Flaschenöffners 800 geöffnet. In Schritt S07 erfolgt das Einschenken des Getränks in das Serviergefäß 301' wie oben beschrieben. Im Schritt S08 wird das Einschenken unterbrochen und die Flasche 411' mit einem darin befindlichen Getränkerest geschwenkt, um weitere Bestandteile wie beispielsweise Hefe zu lösen und anschließend wird auch dieser Getränkerest eingeschenkt. Im Schritt S09 wird die leere Flasche 411' in der Flaschenablagevorrichtung 600 abgelegt. In Schritt S10 wird das volle Serviergefäß 301' gegriffen und dem Nutzer/Gast übergeben.

Mit dem Manipulatorsystem 1 kann insbesondere auch ein Verfahren zum Bereitstellen von eingeschenkten Getränken an einen Nutzer/Gast durchgeführt werden, wobei das Verfahren die folgenden Verfahrensschritte umfasst: Bereitstellen zumindest einer Flasche 411 in einer ersten Position P1a, wobei die zumindest eine Flasche 411 mit einem einzuschenkenden Getränk befüllt ist; Bereitstellen zumindest eines Serviergefäßes 301 in einer zweiten Position P2a, wobei das Serviergefäß 301 mit dem einzuschenkenden Getränk befüllt werden kann; Greifen des Serviergefäßes 301, wobei das Serviergefäß 301 in der zweiten Position P2a bereitgestellt ist, mittels eines Greifers 200 eines kraftgeregelten Manipulators 100; Bewegen des gegriffenen Serviergefäßes 301' von der zweiten Position P2a in eine dritte Position P3, wobei die dritte Position P3 einer Serviergefäßaufnahmevorrichtung 500 zugeordnet ist, und wobei das Serviergefäß 301' von der Serviergefäßaufnahmevorrichtung 500 in einer nicht-vertikalen Orientierung in der dritten Position P3 aufgenommen wird; und Greifen der zumindest einen Flasche 411 mittels des Greifers 200 des kraftgeregelten Manipulators 100; Positionieren und Orientieren der gegriffenen Flasche 411', so dass zumindest ein Teil des einzuschenkenden Getränks in das Serviergefäß 301' in der dritten Position P3 fließt; Aufrichten des Serviergefäßes 301' mittels des Greifers 200, während das einzuschenkenden Getränk in das Serviergefäß 301' fließt; und Übergeben des befüllten Serviergefäßes 301' an einen Nutzer/Gast, in einer siebten Position, wenn der Manipulator eine vertikale Kraft auf das befüllte Serviergefäß 301' ermittelt/erfasst, die eine definierte, der Gewichtskraft entgegengerichtete Mindestkraft überschreitet.

Vorzugsweise ist die Mindestkraft gleich der der Gewichtskraft des befüllten Serviergefäßes 301' und bevorzugt zumindest 90% der Gewichtskraft des befüllten Serviergefäßes 301'. Vorzugsweise wird der Greifer 200 beim Bewegen des gegriffenen Serviergefäßes 301' von der zweiten Position P2a in eine dritte Position P3 dann geöffnet, wenn ein Kontakt des Serviergefäßes 301' mit der Serviergefäßaufnahmevorrichtung 500 in vertikaler Richtung von dem kraftgeregelten Manipulator 100 ermittelt wird. Vorzugsweise wartet der Manipulator 100 in einer initialen Pose auf eine Krafteinwirkung eines Nutzers/Gastes, wobei die Richtung der Krafteinwirkung als ein Befehl interpretiert wird, ein bestimmtes Getränk einzuschenken und zu servieren. Dieser Bedienauftrag wird dann zunächst in einen Befehl zum Greifen einer Flasche 411, 421, welche mit einem einzuschenkenden Getränk befüllt ist, umgesetzt. Vorzugsweise bestimmt die Richtung der Krafteinwirkung des Nutzers/Gastes den Bedienauftrag und dient somit der Auswahl eines von mehreren unterschiedlichen Getränken. Beispielsweise führt eine Berührung auf der rechten Seite des Manipulators 100 zu einer Krafteinwirkung nach links und zur Auswahl einer bestimmten ersten Getränkesorte. Eine Berührung auf der linken Seite des Manipulators 100 führt zu einer Krafteinwirkung nach rechts und zur Auswahl einer bestimmten zweiten Getränkesorte. Der Bedienauftrag umfasst daher besonders bevorzugt einen Auswahlbefehl zum Greifen einer Flasche 411, 421, von einem der zumindest zwei unterschiedlichen Positionsfelder 410, 420 einer Flaschenbereitstellungsvorrichtung 400, wobei die zumindest zwei unterschiedliche Positionsfelder 410, 420 jeweils definierte erste Positionen P1a, ... P1n und P1b, ... P1m aufweisen, und auf den zumindest zwei unterschiedlichen Positionsfeldern 410, 420 Flaschen 411, 421, welche mit unterschiedlichen einzuschenkenden Getränken befüllt sind, angeordnet werden können. Entsprechend dem Auswahlbefehl greift der Manipulator 100, eine Flasche 411, 421 von einem ausgewählten Positionsfeld 410, 420 mittels des Greifers 200.

Vorzugsweise wird die Gewichtskraft der vom Greifer 200 gegriffenen Objekte, bestimmt, und mittels der bestimmten Gewichtskraft das gegriffene Objekt bestimmt, wobei vorzugsweise zumindest das Serviergefäß 301, eine volle Flasche 411 und eine leere Flasche voneinander unterschieden werden können. Ebenso kann die am Greifer 200 ermittelte Gewichtskraft dazu genutzt werden, zu bestimmen ob überhaupt ein Objekt (Flasche 411, Serviergefäß 301) gegriffen wurde. Somit kann ein Fehler erkannt werden, wenn der Greifer 200 in einem Verfahrensschritt ein Objekt gegriffen haben müsste, jedoch keine zusätzliche wirkende Gewichtskraft am Greifer 200 ermittelt wird. In diesem Fall hat der Greifer 200 kein Objekt gegriffen.

Vorzugsweise ordnet der Manipulator eine leere Flasche in einer Flaschenablagevorrichtung 600 an, wobei die Flaschenablagevorrichtung 600 zumindest zwei definierte vierte Positionen P4a, ... P4n umfasst, auf welchen jeweils eine leere Flasche angeordnet werden kann, wobei der Manipulator 100 zunächst eine vierten Position P4a, ... P4n positionsgeregelt anfährt und anschließend eine leere Flasche 411 kraftgeregelt auf der angefahrenen vierten Position anordnet.

Vorzugsweise bewegt der Manipulator 100 die mittels des Greifers gegriffene Flasche 411' in Abhängigkeit von deren Gewicht entweder in die dritte Position P3 oder in eine vierte Position P4a...P4n.

Vorzugsweise öffnet der Manipulator 100 eine gegriffene Flasche 411' mittels eines Flaschenöffners 800, wobei der Flaschenöffner 800 in einer fünften Position P5 angeordnet ist.

Vorzugsweise positioniert und orientiert der Manipulator 100 ein Serviergefäß 301', welches mittels des Greifers 200 gegriffen ist, über einer Spülvorrichtung 700, wobei die Spülvorrichtung 700 in einer sechsten Position P6 angeordnet ist, und wobei anschließend das Serviergefäß 301' mittels der Spülvorrichtung 700 gespült wird.

Vorzugsweise verfährt der Manipulator 100 in die Initialpose und bewegt anschließend den Greifer 200 wiederholt in einer horizontalen Richtung hin und her, wenn ein Fehler im Verfahren erkannt wird. Besonders bevorzugt verfährt der Manipulator in die Ausgangspose/-position (beispielsweise in die Nähe der Positionen P1 bis P6) des entsprechenden Verfahrensschritts, ermittelt einen sicheren virtuellen Punkt ausgehend von bekannten im Umfeld befindlichen Objekten, Serviergefäßen und/oder Flaschen und/oder Positionen an den entsprechend genannte Objekte angeordnet sein sollten. Dieser virtuelle Punkt kann anschließend angefahren werden. Ist der virtuelle Punkt erreicht, bewegt der Manipulator 100 den Greifer 200 wiederholt in einer horizontalen Richtung hin und her, wenn ein Fehler im Verfahren erkannt wird. Dieses wiederholte Hin-und-Her-Bewegen des Greifers ähnelt vorzugsweise einem Kopfschütteln. Vorzugsweise betätigt der Manipulator 100 eine Klingel 900, wenn ein Fehler im Verfahren erkannt wird.

Vorzugsweise fährt der Manipulator 100 eine Position P1, P2, P3, P4, P5, P6, mit einer unbekannten Abweichung, zunächst positionsgeregelt an, und fährt anschließend mittels Kraftregelung, durch Berührung der, den Positionen P1, P2, P3, P4, P5, P6 zugeordneten Strukturen, in die entsprechende Position, wobei die Berührung der, den Positionen zugeordneten Strukturen mit dem Manipulator 100, mit dem Greifer 200 oder mit einem gegriffenen Objekt 301', 411' erfolgen kann.

Vorzugsweise ist das einzuschenkende Getränk ein Weizenbier, wobei der Manipulator 100 nach dem Aufrichten des Serviergefäßes 301' die gegriffene, noch nicht vollständig eingeschenkte Flasche 411' schwenkt und anschließend so über der Öffnung 325 des Serviergefäßes 301' positioniert, dass ein sich in der Flasche 411' befindlicher Rest des einzuschenkenden Weizenbieres in das Serviergefäß 301' fließt.

Vorzugsweise ist die Orientierung der gegriffenen Flasche 411', während das einzuschenkenden Getränk in das Serviergefäß 301' fließt, anpassbar, um die Fließgeschwindigkeit des einzuschenkenden Getränks anzupassen. Dies ermöglicht es, die Schaumbildung bei kohlensäurehaltigen Getränken zu kontrollieren.

### Bezugszeichenliste:

- 1: Manipulatorsystem
- 10: Grundplatte
- 100: kraftgeregelter Manipulator
- 200: Greifer
- 210, 220: Greifelemente
- 211, 221: erste Kontaktelemente
- 212, 222: zweite Kontaktelemente
- 215, 225: Achsen
- 230: Tastmittel
- 231, 232: Vorsprünge
- 241a, 241b, 242a, 242b: Kontaktflächen
- 250: Grundkörper
- 300: Serviergefäßbereitstellungsvorrichtung
- 301, 302: Serviergefäß
- 301': Gegriffenes Serviergefäß
- 310: untere Kante
- 320: Seitenfläche
- 325: Öffnung
- 330: Längsachse
- 400: Flaschenbereitstellungsvorrichtung
- 410, 420: Positionsfelder
- 411, 412; 421: Flasche
- 411': gegriffene Flasche
- 500: Serviergefäßaufnahmevorrichtung
- 510: Aussparung
- 520: Vorsprung
- 600: Flaschenablagevorrichtung
- 700: Spülvorrichtung
- 800: Flaschenöffner
- 820: Öffnung
- 900: Klingel
- P1a, ... P1n: erste Positionen
- P1b,... P1m: erste Positionen
- P2a, ... P2n: zweite Positionen
- P3: dritte Position
- P4a, ... P4n: vierte Positionen
- P5: fünfte Position
- P6: sechste Position
- S01: Manipulator wartet in Initialpose
- S02: Interpretieren und Umsetzen eines Bedienbefehls
- S03: Greifen eines Serviergefäßes
- S04: Spülen und Anordnen des Serviergefäßes in der Serviergefäßaufnahmevorrichtung
- S05: Greifen einer Flasche
- S06: Öffnen der Flasche mittels des Flaschenöffners
- S07: Einschenken des Getränks aus der Flasche in das Serviergefäß
- S08: Schwenken der nicht vollständig eingeschenkten Flasche und restliches Einschenken
- S09: Ablegen der Flasche
- S10: Übergabe des Serviergefäßes an den Nutzer/Gast

## Patentansprüche

1. Manipulatorsystem (1) zum Bereitstellen von eingeschenkten Getränken an einen Nutzer, umfassend:
eine Flaschenbereitstellungsvorrichtung (400), wobei die Flaschenbereitstellungsvorrichtung (400) zumindest eine definierte erste Position (P1a) umfasst, wobei auf der ersten Position (P1a) eine Flasche (411) angeordnet werden kann, und wobei die Flasche (411) mit einem einzuschenkenden Getränk befüllt ist;
eine Serviergefäßbereitstellungsvorrichtung (300), wobei die Serviergefäßbereitstellungsvorrichtung (300) zumindest eine definierte zweite Position (P2a) umfasst, und wobei auf der zweite Position (P2a) ein Serviergefäß (301) angeordnet werden kann;
zumindest eine Serviergefäßaufnahmevorrichtung (500), wobei die Serviergefäßaufnahmevorrichtung (500) dazu eingerichtet ist, das Serviergefäß (301) in einer dritten Position (P3) aufzunehmen, und wobei die Serviergefäßaufnahmevorrichtung (500) eine Aussparung (510) und zumindest einen Vorsprung (520) umfasst, wobei
die Aussparung (510) dazu eingerichtet ist, eine untere Kante (310) des Serviergefäßes (301) aufzunehmen, und
der zumindest eine Vorsprung (520) dazu eingerichtet ist, an einer Seitenfläche (320) des Serviergefäßes (301) anzuliegen; und
zumindest einen kraftgeregelten Manipulator (100), wobei der kraftgeregelte Manipulator (100) einen Greifer (200) umfasst, und wobei der kraftgeregelte Manipulator (100) dazu eingerichtet ist:
ein Serviergefäß (301) mittels des Greifers (200) zu greifen, und von der zweiten Position (P2) in die dritte Position (P3) zu bewegen;
eine Flasche (411) mittels des Greifers (200) in einer ersten Position (P1a) der Flaschenbereitstellungsvorrichtung (400) zu greifen und die gegriffene Flasche (411) so zu positionieren und zu orientieren, dass zumindest ein Teil des einzuschenkenden Getränks in das von der Serviergefäßaufnahmevorrichtung (500) aufgenommene Serviergefäß (301) fließt; und
wobei der kraftgeregelte Manipulator (100) weiterhin zumindest einen Sensor umfasst, welcher dazu eingerichtet ist, Kräfte in vertikaler Richtung zu ermitteln, und wobei der kraftgeregelte Manipulator (100) weiter dazu eingerichtet ist, das mit dem Getränk befüllte Serviergefäß (301) mittels des Greifers (200) zu greifen und einem Nutzer zu übergeben, wenn der Manipulator eine vertikale Kraft auf das befüllte Serviergefäß (301) ermittelt, die eine definierte, der Gewichtskraft entgegengerichtete Mindestkraft überschreitet, wobei
die Serviergefäßaufnahmevorrichtung (500) dazu eingerichtet ist, das Serviergefäß (301) in der dritten Position (P3) in einer nicht-vertikalen Orientierung aufzunehmen, wobei
die Längsachse (330) des Serviergefäßes (301) in der nicht-vertikalen Orientierung mit einer Grundplatte (10) einen Winkel von zumindest 20°, bevorzugt von zumindest 30° und am bevorzugtesten von zumindest 45° einschließt.

2. Das Manipulatorsystem (1) nach Anspruch 1, wobei der Manipulator (100) mehrere Bewegungsachsen aufweist, und jeder Bewegungsachse ein Sensor zugeordnet ist, wobei der Sensor Kräfte und/oder Momente bestimmt, welche auf die Bewegungsachse wirken, der der Sensor zugeordnet ist, wobei
der kraftgeregelte Manipulator vorzugsweise ein Leichtbauroboter, und besonders bevorzugt ein LBR iiwa ist.

3. Das Manipulatorsystem (1) nach einem der vorhergehenden Ansprüche, wobei der Manipulator (100) dazu eingerichtet ist, die Gewichtskraft der vom Greifer (200) gegriffenen Objekte zu bestimmen, und wobei
die Mindestkraft vorzugsweise gleich der Gewichtskraft des befüllten Serviergefäßes (301) ist, oder bevorzugt zumindest 90% der Gewichtskraft des befüllten Serviergefäßes (301) ist.

4. Das Manipulatorsystem (1) nach einem der vorhergehenden Ansprüche, wobei die Flaschenbereitstellungsvorrichtung (400) zumindest zwei definierte erste Positionen (P1a, ... P1n) umfasst, auf welchen jeweils eine Flasche (411, 412) angeordnet werden kann, und wobei
der Manipulator (100) dazu eingerichtet ist, eine erste Position (P1a, ... P1n) positionsgeregelt anzufahren, und eine Flasche (411, 412), welche auf der angefahrenen ersten Position (P1a, ... P1n) angeordnet ist, mittels des Greifers (200) kraftgeregelt zu greifen, und wobei
die Flaschenbereitstellungsvorrichtung (400) vorzugsweise zumindest zwei unterschiedliche Positionsfelder (410, 420) umfasst, wobei
die zumindest zwei unterschiedlichen Positionsfelder jeweils definierte erste Positionen (P1a, ... P1n; P1b, ... P1m) aufweisen, und auf den zumindest zwei unterschiedlichen Positionsfeldern (410, 420) Flaschen (411, 421), welche mit unterschiedlichen einzuschenkenden Getränken befüllt sind, angeordnet werden können, wobei
der Manipulator (100) dazu vorzugswiese eingerichtet ist, abhängig von einer Eingabe eines Nutzers eine Flasche (411, 421) von einem ausgewählten Positionsfeld (410, 420) mittels des Greifers (200) zu greifen.

5. Das Manipulatorsystem (1) nach einem der vorhergehenden Ansprüche, wobei die Flaschenbereitstellungsvorrichtung (400) so angeordnet ist, dass die Flaschen zumindest teilweise in der Grundplatte (10) versenkt sind, und/oder
die Flaschenbereitstellungsvorrichtung (400) eine Kühlvorrichtung umfasst, die die Flaschen kühlt.

6. Das Manipulatorsystem (1) nach einem der vorhergehenden Ansprüche, wobei der Manipulator (100) dazu eingerichtet ist über Berührungen an zumindest einer der Bewegungsachsen des Manipulators (100) gesteuert zu werden.

7. Das Manipulatorsystem (1) nach einem der vorhergehenden Ansprüche, wobei die Serviergefäßbereitstellungsvorrichtung (300) zumindest zwei definierte zweite Positionen (P2a, ... P2n) umfasst, auf welchen jeweils ein Serviergefäß (301, 302) angeordnet werden kann, und wobei
der Manipulator (100) dazu eingerichtet ist, eine zweite Position (P2a, ... P2n) positionsgeregelt anzufahren, und ein Serviergefäß (301, 302), welches auf der angefahrenen zweiten Position (P2a, ... P2n) angeordnet ist, mittels des Greifers (200) kraftgeregelt zu greifen.

8. Das Manipulatorsystem (1) nach einem der vorhergehenden Ansprüche, wobei das Manipulatorsystem (1) weiterhin
zumindest eine Flaschenablagevorrichtung (600) umfasst, wobei die Flaschenablagevorrichtung (600) zumindest zwei definierte vierte Positionen (P4a, ... P4n) umfasst, auf welchen jeweils eine leere Flasche (411) angeordnet werden kann, wobei
der Manipulator (100) dazu eingerichtet ist, eine vierte Position (P4a, ... P4n) positionsgeregelt anzufahren, und eine leere Flasche (411), kraftgeregelt auf der angefahrenen vierten Position (P4a, ... P4n) anzuordnen.

9. Das Manipulatorsystem (1) nach einem der vorhergehenden Ansprüche, wobei das Manipulatorsystem (1) weiterhin
zumindest einen Flaschenöffner (800) umfasst, wobei der Flaschenöffner (800) in einer fünften Position (P5) angeordnet ist, und der Manipulator (100) dazu eingerichtet ist, eine gegriffene Flasche (411) mittels des Flaschenöffners (800) zu öffnen, und/oder wobei das Manipulatorsystem (1) weiterhin
eine Klingel (900) umfasst, und wobei der Manipulator (100) dazu eingerichtet ist, die Klingel (900) zu betätigen, wenn ein Fehler beim Betrieb des Manipulatorsystem auftritt.

10. Das Manipulatorsystem (1) nach einem der vorhergehenden Ansprüche, wobei das Manipulatorsystem (1) weiterhin
eine Spülvorrichtung (700) umfasst, wobei die Spülvorrichtung (700) in einer sechsten Position (P6) angeordnet ist, und dazu eingerichtet ist, ein Serviergefäß (301) zu spülen, und wobei
der Manipulator dazu eingerichtet ist, ein Serviergefäß (301) mittels des Greifers (200) zu greifen, und so über der Spülvorrichtung (700) zu positionierten und zu orientieren, dass das Serviergefäß (301) gespült wird, wobei
die Spülvorrichtung (700) und die Serviergefäßaufnahmevorrichtung (500) vorzugsweise in einer Wanne angeordnet sind, wobei die Wanne dazu eingerichtet ist, Spülwasser und/oder verschüttete Teile des einzuschenkenden Getränks aufzunehmen.

11. Das Manipulatorsystem (1) nach einem der vorhergehenden Ansprüche, wobei der Manipulator (100) dazu eingerichtet ist, eine Position (P1, P2, P3, P4, P5, P6) mit einer unbekannten Abweichung positionsgeregelt anzufahren und sich mittels Kraftregelung, durch Berührung der, den Positionen zugeordneten Strukturen, genau auszurichten, wobei
die Berührung der, den Positionen zugeordneten Strukturen mit dem Manipulator (100), mit dem Greifer (200) oder mit einem gegriffenen Objekt (301, 411) erfolgen kann.

12. Das Manipulatorsystem (1) nach einem der vorhergehenden Ansprüche, wobei der Greifer (200)
zwei Greifelemente (210, 220) zum Greifen einer Flasche umfasst, wobei zumindest ein Greifelement (210; 220) zum Greifen auf das jeweils andere Greifelement (210; 220) zu bewegt werden kann, wobei
jedes Greifelement jeweils ein erstes (211; 221) und ein zweites Kontaktelement (212; 222) umfasst, wobei die Kontaktelemente senkrecht zur Greifbewegung schwenkbar an dem ersten oder zweiten Greifelement gelagert sind, so dass sich die Kontaktelemente beim Greifen an einer Kontur eines gegriffenen Objekts ausrichten können, und
das erste Kontaktelement (221) ein Tastmittel (230) zum Stützen eines Serviergefäßes (301) umfasst, das zumindest zwei Vorsprünge (231, 232) aufweist, und wobei die Vorsprünge (231, 232) derart dimensioniert sind, um an einer Seitenfläche (320) des Serviergefäßes (301) in der Nähe einer Öffnung (325) des Serviergefäßes (301) anzuliegen, so dass, wenn der Greifer (200) eine Flasche (411) greift, die Öffnung der Flasche in oder über der Öffnung (325) des Serviergefäßes (301) positioniert ist, wobei die Kontaktelemente vorzugsweise jeweils zwei zentrierende Kontaktflächen (241a, 241b; 242a, 242b) aufweisen, und die Kontaktflächen (241a, 241b; 242a, 242b) vorzugsweise einen Winkel kleiner 180° einschließen, wobei
die Kontaktflächen vorzugsweise mit einem duktilen Material versehen sind, wobei das duktile Material vorzugsweise eine Shore-A Härte von höchstens 70, bevorzugt von höchstens 50 und am bevorzugtesten von höchstens 30 aufweist.

## Claims

1. A manipulator system (1) for providing poured beverages to a user, comprising:
a bottle providing device (400), wherein the bottle providing device (400) comprises at least one defined first position (P1a), wherein a bottle (411) can be arranged on the first position (P1a), and wherein the bottle (411) is filled with a beverage to be poured;
a serving vessel providing device (300), wherein the serving vessel providing device (300) comprises at least one defined second position (P2a), and wherein on the second position (P2a) a serving vessel (301) can be arranged;
at least one serving vessel receiving device (500), wherein the serving vessel receiving device (500) is configured to receive the serving vessel (301) in a third position (P3), and wherein the serving vessel receiving device (500) comprises a recess (510) and at least one protrusion (520), wherein
the recess (510) is configured to receive a lower edge (310) of the serving vessel (301), and
the at least one protrusion (520) is configured to abut a side surface (320) of the serving vessel (301); and
at least one force regulated manipulator (100), wherein the force regulated manipulator (100) comprises a gripper (200), and wherein the force regulated manipulator (100) is configured to:
gripping a serving vessel (301) by means of the gripper (200), and move it from the second position (P2) to the third position (P3);
gripping a bottle (411) by means of the gripper (200) in a first position (P1a) of the bottle providing device (400), and positioning and orientating the gripped bottle (411) so that at least a portion of the beverage to be poured flows into the serving vessel (301) received by the serving vessel receiving device (500); and
wherein the force regulated manipulator (100) further comprises at least one sensor configured to determine forces in the vertical direction,
and wherein the force regulated manipulator (100) is further configured to grip the beverage-filled serving vessel (301) by means of the gripper (200) and handing it over to a user when the manipulator detects a vertical force on the filled serving vessel (301) that exceeds a defined minimum force opposing the weight force, wherein
the serving vessel receiving device (500) is configured to receive the serving vessel (301) in the third position (P3) in a non-vertical orientation, wherein
the longitudinal axis (330) of the serving vessel (301) in the non-vertical orientation encloses an angle with a base plate (10) of at least 20°, preferably at least 30°, and most preferably at least 45°.

2. The manipulator system (1) according to claim 1, wherein the manipulator (100) has multiple movement axes, and each movement axis is associated with a sensor, wherein the sensor determines forces and/or torques acting on the movement axis with which the sensor is associated, wherein
the force regulated manipulator is preferably a lightweight robot, and particularly preferably an LBR iiwa.

3. The manipulator system (1) according to any one of the preceding claims, wherein the manipulator (100) is configured to determine the weight force of the objects gripped by the gripper (200), and wherein
the minimum force is preferably equal to the weight force of the filled serving vessel (301), or preferably at least 90% of the weight force of the filled serving vessel (301).

4. The manipulator system (1) according to any one of the preceding claims, wherein the bottle providing device (400) comprises at least two defined first positions (P1a, ... P1n), on each of which a bottle (411, 412) can be arranged, and wherein
the manipulator (100) is configured to approach a first position (P1a, ... P1n) in a position-regulated manner, and to grip a bottle (411, 412), which is arranged on the approached first position (P1a, ... P1n), in a force-regulated manner by means of the gripper (200), and wherein
the bottle providing device (400) preferably comprises at least two different position fields (410, 420), wherein
the at least two different position fields each have defined first positions (P1a, ... P1n; P1b, ... Pim), and on the at least two different position fields (410, 420) bottles (411, 421) filled with different beverages to be poured can be arranged, wherein
the manipulator (100) is preferably configured to grip a bottle (411, 421) from a selected position field (410, 420) by means of the gripper (200) depending on an input of a user.

5. The manipulator system (1) according to any one of the preceding claims, wherein the bottle providing device (400) is arranged such that the bottles are at least partially submerged in the base plate (10), and/or
the bottle providing device (400) comprises a cooling device that cools the bottles.

6. The manipulator system (1) according to any one of the preceding claims, wherein the manipulator (100) is configured to be controlled via touches on at least one of the movement axes of the manipulator (100).

7. The manipulator system (1) according to any one of the preceding claims, wherein the serving vessel providing device (300) comprises at least two defined second positions (P2a, ... P2n), on each of which a serving vessel (301, 302) can be arranged, and wherein
the manipulator (100) is configured to approach a second position (P2a, ... P2n) in a position-regulated manner, and to grip a serving vessel (301, 302), which is arranged on the approached second position (P2a, ... P2n), in a force-regulated manner by means of the gripper (200).

8. The manipulator system (1) according to any one of the preceding claims, wherein the manipulator system (1) further comprises
at least one bottle deposition device (600), wherein the bottle deposition device (600) comprises at least two defined fourth positions (P4a, ... P4n) on each of which an empty bottle (411) can be arranged, wherein
the manipulator (100) is configured to approach a fourth position (P4a, ... P4n) in a position-regulated manner, and to arrange an empty bottle (411) on the approached fourth position (P4a, ... P4n) in a force-regulated manner.

9. The manipulator system (1) according to any one of the preceding claims, wherein the manipulator system (1) further comprises
at least one bottle opener (800), wherein the bottle opener (800) is arranged in a fifth position (P5), and wherein the manipulator (100) is configured to open a gripped bottle (411) by means of the bottle opener (800), and/or wherein the manipulator system (1) further comprises
a bell (900), and wherein the manipulator (100) is configured to actuate the bell (900) when a failure occurs in the operation of the manipulator system.

10. The manipulator system (1) according to any one of the preceding claims, wherein the manipulator system (1) further comprises
a rinsing device (700), wherein the rinsing device (700) is arranged in a sixth position (P6) and is adapted to rinse a serving vessel (301), and wherein
the manipulator is configured to grip a serving vessel (301) by means of the gripper (200), and to position and to orientate the serving vessel (301) above the rinsing device (700) such that the serving vessel (301) is rinsed, wherein
the rinsing device (700) and the serving vessel receiving device (500) are preferably arranged in a tub, wherein the tub is configured to receive rinsing water and/or spilled parts of the beverage to be poured.

11. The manipulator system (1) according to any one of the preceding claims, wherein the manipulator (100) is configured to approach a position (P1, P2, P3, P4, P5, P6) with an unknown deviation in a position-controlled manner and to align itself precisely by means of force control, by touching the structures associated with the positions, wherein
the touching of the structures associated with the positions with the manipulator (100), with the gripper (200) or with a gripped object (301, 411) can take place.

12. The manipulator system (1) according to any one of the preceding claims, wherein the gripper (200) comprises
two gripping elements (210, 220) for gripping a bottle, wherein at least one gripping element (210; 220) is movable towards the other gripping element (210; 220) for gripping, wherein
each gripping element comprises a first (211; 221) and a second contact element (212; 222), respectively, wherein the contact elements are pivotably mounted on the first or second gripping element perpendicularly to the gripping movement, so that the contact elements can align themselves at a contour of a gripped object during gripping, and
the first contact element (221) comprises a feeler means (230) for supporting a serving vessel (301) having at least two protrusions (231, 232), and wherein the protrusions (231, 232) are dimensioned to abut a side surface (320) of the serving vessel (301) proximate an opening (325) of the serving vessel (301) such that when the gripper (200) grips a bottle (411), the opening of the bottle is positioned in or over the opening (325) of the serving vessel (301), wherein the contact elements preferably each have two centering contact surfaces (241a, 241b; 242a, 242b), and the contact surfaces (241a, 241b; 242a, 242b) preferably enclose an angle smaller than 180°, wherein
the contact surfaces are preferably provided with a ductile material, the ductile material preferably having a Shore A hardness of at most 70, preferably at most 50 and most preferably at most 30.

## Revendications

1. Système de manipulateur (1) pour fournir à un utilisateur des boissons versées, incluant :
un dispositif de fourniture de bouteilles (400), le dispositif de fourniture de bouteilles (400) occupant au moins une première position définie (P1a), une bouteille (411) pouvant être disposée dans la première position (P1a), et la bouteille (411) étant remplie avec une boisson à verser ;
un dispositif de fourniture de récipients de service (300), le dispositif de fourniture de récipients de service (300) occupant au moins une deuxième position définie (P2a), et un récipient de service (301) pouvant être disposé dans la seconde position (P2a) ;
au moins un dispositif de réception de récipient de service (500), le dispositif de réception de récipient de service (500) étant agencé pour recevoir le récipient de service (301) dans une troisième position (P3), et le dispositif de réception de récipient de service (500) incluant un évidement (510) et au moins une saillie (520),
l'évidement (510) étant agencé pour recevoir un bord inférieur (310) du récipient de service (301), et
la au moins une saillie (520) étant agencée pour prendre appui sur une face latérale (320) du récipient de service (301) ; et
au moins un manipulateur à force régulée (100), le manipulateur à force régulée (100) incluant un préhenseur (200), et le manipulateur à force régulée (100) étant agencé pour :
prendre un récipient de service (301) au moyen du préhenseur (200) et le déplacer de la deuxième position (P2) à la troisième position (P3) ;
prendre une bouteille (411) au moyen du préhenseur (200) dans une première position (P1a) du dispositif de fourniture de bouteilles (400) et positionner et orienter la bouteille prise (411) de façon qu'au moins une partie de la boisson à verser coule dans le récipient de service (301) reçu par le dispositif de réception de récipient de service (500) ; et
le manipulateur à force régulée (100) incluant en outre au moins un capteur qui est agencé pour détecter des forces dans la direction verticale, et le manipulateur à force régulée (100) étant en outre agencé pour prendre, au moyen du préhenseur (200), le récipient de service (301) empli avec la boisson et pour le transmettre à un utilisateur si le manipulateur détecte sur le récipient de service empli (301) une force verticale qui excède une force minimale définie opposée à la force pondérale,
le dispositif de réception de récipient de service (500) étant agencé pour recevoir, dans la troisième position (P3), le récipient de service (301) dans une orientation non verticale,
l'axe longitudinal (330) du récipient de service (301) dans l'orientation non verticale formant avec une plaque de base (10) un angle d'au moins 20°, préférentiellement d'au moins 30° et, le plus préférentiellement, d'au moins 45°.

2. Le système de manipulateur (1) selon la revendication 1, le manipulateur (100) comportant plusieurs axes de déplacement, et à chaque axe de déplacement étant associé un capteur, le capteur déterminant des forces et/ou des moments qui agissent sur l'axe de déplacement auquel le capteur est associé,
le manipulateur à force régulée étant de préférence un robot léger et, particulièrement préférentiellement, un LBR iiwa.

3. Le système de manipulateur (1) selon une des revendications précédentes, le manipulateur (100) étant agencé pour déterminer la force pondérale des objets pris par le préhenseur (200), et
la force minimale étant de préférence égale à la force pondérale du récipient de service empli (301) ou, préférentiellement, d'au moins 90 % de la force pondérale du récipient de service empli (301).

4. Le système de manipulateur (1) selon une des revendications précédentes, le dispositif de fourniture de bouteilles (400) comprenant au moins deux premières positions définies (P1a,... P1n) dans lesquelles une bouteille (411, 412) respective peut être disposée, et
le manipulateur (100) étant agencé pour rallier une première position (P1a, ... P1n) avec une position régulée et, au moyen du préhenseur (200), pour prendre avec une force régulée une bouteille (411, 412) qui est disposée dans la première position ralliée (P1a, ... P1n), et
le dispositif de fourniture de bouteilles (400) incluant de préférence au moins deux zones de positions différentes (410, 420),
les au moins deux zones de positions différentes comportant des premières positions définies respectives (P1a,... P1n ; P1b, ... P1m), et des bouteilles (411, 421) qui sont emplies avec différentes boissons à verser) pouvant être disposées dans les au moins deux zones de positions différentes (410, 420),
le manipulateur (100) étant de préférence agencé pour prendre une bouteille (411, 421) dans une zone de position (410, 420) au moyen du préhenseur (200) en fonction d'une saisie d'un utilisateur.

5. Le système de manipulateur (1) selon une des revendications précédentes, le dispositif de fourniture de bouteilles (400) étant agencé de façon que les bouteilles soient au moins en partie encastrées dans la plaque de base (10) et/ou
le dispositif de fourniture de bouteilles (400) incluant un dispositif de refroidissement qui refroidit les bouteilles.

6. Le système de manipulateur (1) selon une des revendications précédentes, le manipulateur (100) étant agencé pour être commandé par l'intermédiaire d'actions tactiles sur au moins un des axes de déplacement du manipulateur (100).

7. Le système de manipulateur (1) selon une des revendications précédentes, le dispositif de fourniture de récipients de service (300) incluant au moins deux deuxièmes positions définies (P2a, ... P2n) dans lesquelles un récipient de service (301, 302) respectif peut être disposé, et
le manipulateur (100) étant agencé pour rallier une deuxième position (P2a, ... P2n) avec une position régulée et, au moyen du préhenseur (200), pour prendre avec une force régulée un récipient de service (301, 302) qui est disposé dans la deuxième position ralliée (P2a, ... P2n).

8. Le système de manipulateur (1) selon une des revendications précédentes, le système de manipulateur (1) incluant en outre
au moins un dispositif de dépôt de bouteilles (600), le dispositif de dépôt de bouteilles (600) incluant au moins deux quatrièmes positions définies (P4a, ... P4n) dans lesquelles peut être disposée une bouteille vide respective (411),
le manipulateur (100) étant agencé pour rallier une quatrième position (P4a, ... P4n) avec une position régulée et pour disposer une bouteille vide (411) avec une force régulée dans la quatrième position ralliée (P4a, ... P4n).

9. Le système de manipulateur (1) selon une des revendications précédentes, le système de manipulateur (1) incluant en outre
au moins un ouvre-bouteille (800), l'ouvre-bouteille (800) étant disposé dans une cinquième position (P5), et le manipulateur (100) étant agencé pour ouvrir une bouteille prise (411) au moyen de l'ouvre-bouteille (800), et/ou le système de manipulateur (1) incluant en outre
une sonnette (900), et le manipulateur (100) étant agencé pour actionner la sonnette (900) si une erreur se produit lors du fonctionnement du système de manipulateur.

10. Le système de manipulateur (1) selon une des revendications précédentes, le système de manipulateur (1) incluant en outre
un dispositif de rinçage (700), le dispositif de rinçage (700) étant disposé dans une sixième position (P6) et étant agencé pour rincer un récipient de service (301),
et le manipulateur étant agencé pour prendre un récipient de service (301) au moyen du préhenseur (200) et pour le positionner et l'orienter au-dessus du dispositif de rinçage (700) de façon que le récipient de service (301) soit rincé,
le dispositif de rinçage (700) et le dispositif de réception de récipient de service (500) étant disposés de préférence dans un bac, le bac étant agencé pour recevoir de l'eau de rinçage et/ou des fractions renversées de la boisson à verser.

11. Le système de manipulateur (1) selon une des revendications précédentes, le manipulateur (100) étant agencé pour rallier avec une position régulée une position (P1, P2, P3, P4, P5, P6) avec une déviation inconnue et pour s'aligner avec précision au moyen de la régulation de force, par l'intermédiaire de l'action tactile des structures associées aux positions,
l'action tactile des structures associées aux positions pouvant s'effectuer avec le manipulateur (100), avec le préhenseur (200) et avec un objet pris (301, 411).

12. Le système de manipulateur (1) selon une des revendications précédentes, le préhenseur (200) incluant deux éléments de préhension (210, 220) pour prendre une bouteille, au moins un élément de préhension (210 ; 220) pouvant être déplacé en direction de l'autre élément de préhension respectif (210 ; 200) afin de prendre,
chaque élément de préhension incluant un premier (211 ; 221) et un second élément de contact (212 ; 222) respectifs, les éléments de contact étant monté pivotants sur le premier ou le second élément de préhension perpendiculairement au déplacement de préhension, de façon que, lors de la préhension, les éléments de contact puissent s'aligner avec un contour d'un objet pris, et
le premier élément de contact (221) incluant, pour donner appui à un récipient de service (301), un moyen de palpage (230) qui comporte au moins deux saillies (231, 232), et les saillies (231, 232) étant dimensionnées pour être appliquées contre une face latérale (320) du récipient de service (301) à proximité d'une ouverture (325) du récipient de service (301), de façon que, lorsque le préhenseur (200) prend une bouteille (411), l'ouverture de la bouteille soit positionnée dans ou au-dessus de l'ouverture (325) du récipient de service (301), les éléments de contact comportant de préférence deux surfaces de contact de centrage (241a, 241b ; 242a, 242b) respectives, et les surfaces de contact (241a, 241b ; 242a, 242b) formant de préférence un angle inférieur à 180°,
les surfaces de contact étant munies de préférence d'un matériau ductile, le matériau ductile présentant de préférence une dureté Shore A d'au plus 70, préférentiellement d'au plus 50 et, le plus préférentiellement, d'au plus 30.
